# EUROPEAN PATENT SPECIFICATION

(11) **EP 3 799 250 B1**
(45) Date of publication and mention of the grant of the patent: **24.08.2022**
(21) Application number: 20191802.6
(22) Date of filing: 10.04.2017
(51) Int. Cl.: H02J 7/00

(54) **METHOD AND APPARATUS FOR DETERMINING THE CONDITION OF A BATTERY**
VERFAHREN UND VORRICHTUNG ZUR BESTIMMUNG DES ZUSTANDS EINER BATTERIE
PROCÉDÉ ET APPAREIL PERMETTANT DE DÉTERMINER L'ÉTAT D'UNE BATTERIE

(30) Priority: 08.04.2016 US 201662319973 P; 23.01.2017 US 201762449445 P
(43) Date of publication of application: 31.03.2021
(62) Divisional of application: 17778499.8
(73) Proprietor: Gbatteries Energy Canada Inc., Ottawa, ON K2E 0B9 (CA)
(72) Inventor: TKACHENKO, Oleksandr, Ottawa, Ontario KC2 4C8 (CA); SHERSTYUK, Mykola, Ottawa, Ontario K2C 4E5 (CA)
(74) Representative: Optimus Patents Limited

(56) References cited:
- US-A- 6 094 033
- US-A1- 2014 372 055

## Description

### BACKGROUND

Electrochemical Impedance Spectroscopy (EIS) has been in use for a number of years to test rechargeable batteries, such as lithium ion batteries. EIS is well suited for observing reactions in the kinetics of electrodes and batteries. In EIS, the impedance of battery over a range of frequencies is measured. Energy storage and dissipation properties of the battery can be revealed by inspecting the resulting frequency response curve. Impedance parameters such as ohmic resistance and charge transfer resistance can be estimated, for example, from a Nyquist plot of frequency response of the battery.

Other parameters that can be measured with use of EIS relate to the double layer effect, which is the formation of two layers of opposite polarity at the interface between electrode and electrolyte. The charge stored on one side is equal in value and opposite in sign with respect to the charge stored on the other side. If one of the two phases is a liquid, there is a minimum distance that the solvated ions can reach. This region of minimum distance is the so-called Helmholtz plane. The region external to the Helmholtz plane is called the outer Helmholtz layer. The ions can be located at distances below the plane. This region is called the inner Helmholtz layer. EIS is used to characterize the double layer. Parameters extracted from such characterization are used together with mathematical model of the phenomenon. Electrochemical insertion, intercalation and alloying are all processes involving the inner layer.

Another set of parameters measurable with use of EIS are diffusion and reaction parameters which change during battery charging, discharging and also are dependant on battery age, health condition and temperature. The commonly used experimental setups to parameterize electrochemical systems are cyclic voltammetry and galvanostatic cycling. In cyclic voltammetry, the potential difference is changed continuously with a fixed slope, called sweep rate. The sweep rate is changed in sign once a maximum or a minimum potential difference is reached. During this process, the current intensity is registered as function of the potential and, in general, the shape depends on the sweep rate. In galvanostatic cycling experiments, the current intensity is imposed and constant. The potential will be measured as function of the total charge passed through the system. In general, the shape of this curve is a function of the current intensity. The current intensity is changed in sign once a maximum or a minimum potential difference is reached. The shape of such curves is related to the reaction mechanism, transport of the reactants from the bulk of the phase to the interface, and transport of the product in the opposite direction

The electrode materials have to be stable in the battery electrolyte for the whole potential range used during the battery cycle, and vice versa. Such stability is achieved thanks to the formation of a protective layer called solid electrolyte interphase (SEI). It can be an oxidation/reduction product, in which case it consumes part of the charge of the battery, or a chemical product, formed by contacting the particles with the electrolyte. The SEI influences the kinetic behavior of the electrode, the irreversible charge consumed during cycling, and the cycle life.

US 6,094,033B (Ding et al.) provides a method of detecting the state of charge of a battery. A pulse generator is arranged to receive commands from a processor. An oscillator cooperates with the pulse generator to provide oscillating a-c signals from the pulse generator. The signals are applied via leads to the terminals of a battery, and may preferably be current pulses. A time delay after pulse application may be used. US2014/0372055 A1 (Wang et al.) provides an arrangement for sensing the internal temperature of an electrochemical device. The electrochemical device may be a battery, a fuel cell, a capacitor, a plating system or a galvanic corrosion system. The electrochemical device is excited by a driving profile. Voltage or current data is then acquired from the electrochemical device. State of charge and temperature information for the electrochemical device may then be obtained.

### SUMMARY

In accordance with a first aspect of the invention, a method comprising the steps of appended claim 1 is provided. In accordance with a second aspect of the invention, an apparatus comprising the features of appended claim 7 is provided. The dependent claims provide further details of embodiments of the invention.

### BRIEF DESCRIPTION OF THE DRAWINGS

With respect to the discussion to follow and in particular to the drawings, it is stressed that the particulars shown represent examples for purposes of illustrative discussion, and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:
Fig. 1 shows a battery charging system not falling under the scope of the claims.
Fig. 2 shows a variation of the battery charging system shown in Fig. 1 not falling under the scope of the claims.
Fig. 3 shows a battery charging system in accordance with an embodiment of the present disclosure that uses pulsed charging.
Fig. 4 depicts an illustrative example of a pulse train.
Fig. 5 shows a variation of the battery charging system shown in Fig. 3 in accordance with an embodiment of the present disclosure.
Fig. 6 shows processing for pulsed charging in accordance with the present disclosure using continuous EIS measurements.
Fig. 7 shows processing for pulsed charging in accordance with the present disclosure using intermittent EIS measurements.
Fig. 8 shows processing for pulsed charging in accordance with the present disclosure using pulses suitable for EIS measurements.

### DETAILED DESCRIPTION

The present disclosure describes techniques determining the condition of a battery. According to the invention, a pulse train is used to produce a charging current for charging a battery. Battery condition is measured during the charging. The pulse train can be adjusted based on measured battery parameters along with ambient conditions to optimize the pulse train for battery charging. According to the invention, the pulse train is adjusted, during the time that the battery measurements are made, to comprise pulses that are optimized for the battery measurements.

In the following description, for purposes of explanation, numerous examples and specific details are set forth in order to provide a thorough understanding of the present disclosure.

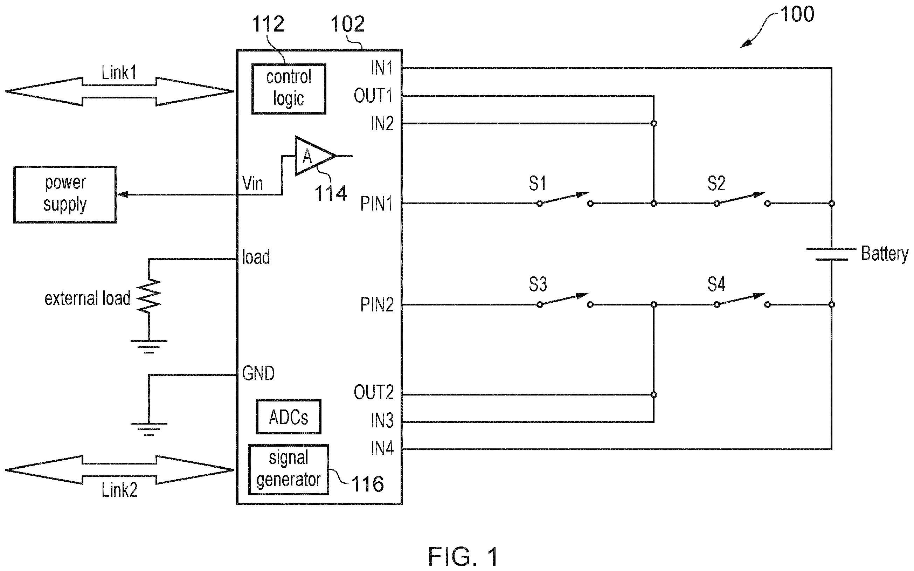

Fig. 1 illustrates a battery charging system (circuit) 100 for charging a rechargeable battery (e.g. lithium-ion battery cell), not falling under the scope of the independent claims. The battery charging system 100 can include a controller 102 and switches S1, S2, S3, S4. Controller 102 can include control logic 112 to perform battery charging in accordance with the present disclosure.

An external load can be connected to the controller 102 at its load terminal to receive power from the battery (battery discharging).

An external power supply can be connected to the controller 102 at its Vin terminal to supply power to the battery during battery charging. The controller 102 can include a level shifter 114 to attenuate the voltage provided by the external power supply during battery charging. The level shifter 114 can be an op-amp, a DC-DC converter, or any other suitable level shifting circuit.

The controller 102 can include high speed analog-to-digital converters (ADCs) for converting signals at its inputs In1, In2, In3, In4.

The controller 102 can include a signal generator 116. The signal generator 116, under control of the control logic 112, can produce a sinusoidal signal of a given frequency. The controller 102 can connect the output of the signal generator 116 to either of its outputs Out1, Out2. In some embodiments, for example, the signal generator 116 can produce signals in the range from 0.1 Hz to 100 MHz. In some instances, the signal generator 116 can output a signal at a single frequency. In other instances, the signal generator 116 can sweep through a range of frequencies. Merely to illustrate this point, for example, the controller 102 can operate the signal generator 116 to output signals in the range from 1 Hz to 100 KHz in increments of 10 Hz at 5 second intervals.

The controller 102 includes Pin1 and Pin2. The controller 102 can connect the battery to an external power supply via Pin1 and Pin2, when in charge mode, to be charged by the external power supply. Alternatively, the controller 102 can connect the battery to an external load via Pin1 and Pin2, when in discharge mode, to provide power from the battery to the external load.

The controller 102 can include communication links Link1, Link2 to communicate with external devices. Link1, for example, can be used to communicate aspects of the battery condition to battery management system in an electronic device (not shown) that incorporates the battery charging system 100. Information relating to battery condition includes but is not limited to battery parameters measured in real time, calculations, overall battery health, charge state, history of battery parameters, and the like. In some embodiments, Link 2 can be used for advanced external loads, so-called "smart" loads, to communicate battery state and negotiate optimal functioning modes for both the battery and the external load. In embodiments that comprise multiple battery systems, both Link1 and Link2 can be used to communicate battery condition and optimal modes, respectively, to other elements in the system.

### Modes of Operation

The discussion will now turn to a description of the discharge mode and charge mode of operation in the battery charging system 100 in accordance with the present disclosure.

### A. Discharge Mode

In discharge mode, the controller 102 can turn OFF or otherwise quiesce the signal generator 116. The controller 102 can operate the switches S1, S2, S3, S4 to the ON state (CLOSED position). The controller 102 can connect PIN1 to the load terminal and Pin2 to the ground (GND) terminal, thus connecting the battery to the external load. In accordance with some embodiment of the present disclosure, during discharge mode the controller 102 may interrupt the delivery of power to the external load to make EIS measurements (described below). For example, a smart load may coordinate with the controller 102 (e.g., vial Link2) to interrupt power for short periods of time (e.g., 50 uS or so).

### B. Charge Mode

In charge mode, the controller 102 can operate the signal generator 116 to output signals. The controller 102 can perform a calibration sequence on the signal generator 116. For example, the controller 102 can operate the switches S1, S2, S3, S4 to the OFF state (OPEN position). In this configuration, output from the signal generator 116 can be provided to Out1 and calibration can be performed via In2. Likewise, output from the signal generator 116 can be provided to Out2 and calibration can be performed via In3.

During charging, the controller 102 can alternate between a charging phase where energy (charging current) is provided from the external power supply to the battery and a measurement phase where making EIS measurements are made on the battery. The alternation between charging phase and measurement phase can be performed intermittently, for example, in response to a change in operating conditions (e.g., ambient temperature). The alternation can be periodic, for example, the EIS measurements can be performed at regular intervals from one millisecond to many minutes.

For the charging phase, the controller 102 can operate switches S1, S2, S3, S4 to the ON state and turn OFF or quiesce the signal generator 116 for the charging phase, thus allowing the external power supply to charge the battery.

For the measurement phase, EIS measurements are typically obtained by disconnecting the battery from its charging current path and coupling the battery to a signal source (drive) in the form of band limited white noise. The EIS measurements include measuring the battery's response (e.g., current response) over a given range of frequencies of the drive signal. Accordingly, the controller 102 can operate the switches S1, S3 to the OFF state to disconnect the external power supply from the battery, and turn ON the signal generator 116 thus providing a drive signal to the battery via output Out1 for making EIS measurements. Measurements can be taken by converting signals at input In1 using an ADC at In1. Since the duration of the measurement can be relatively short (e.g., ranging from tens of microseconds to a few seconds), the measurement can occur without disrupting the normal operation of the battery. For example, where the battery is incorporated into a smart phone, the main processor may choose to insert the EIS measurements at moments it deems the smart phone to be in idle or near idle.

In some embodiments, measurements may be continuous. The controller 102 operate switches S1, S2, S3, S4 to the ON state and turn ON the signal generator 116, thus allowing both power from the external power supply and signals from the signal generator 116 to reach the battery. EIS measurements can be made simultaneous with the battery being charged.

### A. Adapting Battery Charging

It is understood that EIS measurements are correlated with electrochemical and even mechanical phenomena inside the battery. These electrochemical and mechanical phenomena manifest themselves as various parameters of the battery, including for example, state of charge (SOC), capacitance of the double layer, thickness of the double layer, electrolyte oxidation level, corrosion of the current collectors, degradation of the active material binder, diffusion rates within the battery, and other physical aspects of the battery. The EIS measurements can be analyzed as a sum of sinusoidal functions (a Fourier series). In some embodiments, the analysis can be made using a suitable fast Fourier transform (FFT) technique.

In accordance with the present disclosure, the controller 102 can adapt charging of the battery based on the EIS measurements. For example, the charging current may be reduced (e.g., by reducing the gain of level shifter 114) when the EIS measurements indicate that diffusion rates in the battery are dropping. This may be desirable under some circumstances to increase the life cycle of the battery. By inserting EIS measurements at certain intervals, the charging process can be adapted in real time to adjust the charging current to improve the life cycle of the battery.

Further in accordance with the present disclosure, the controller 102 analyzes the EIS measurements to assess the condition of the battery and reports the results from the analysis. In some embodiments, for example, the results may be reported (e.g., via Link1) to a battery management system.

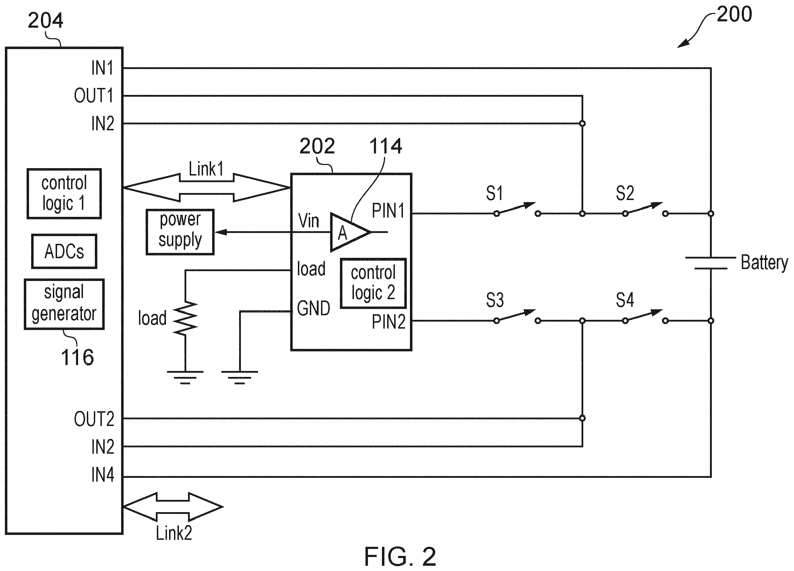

Fig. 2 shows a battery charging system (circuit) 200 not falling under the scope of the independent claims. Battery charging system 200 can comprise first controller 202 and a second controller 204. The circuit components described in controller 102 of battery charging system 100 are apportioned to the first and second controllers 202, 204 of battery charging system 200. Likewise, the control logic 112 in controller 102 of battery charging system 100 is apportioned to control logic 1 and control logic 2 in battery charging system 200. Operation of battery charging system 200 is the same as battery charging system 100.

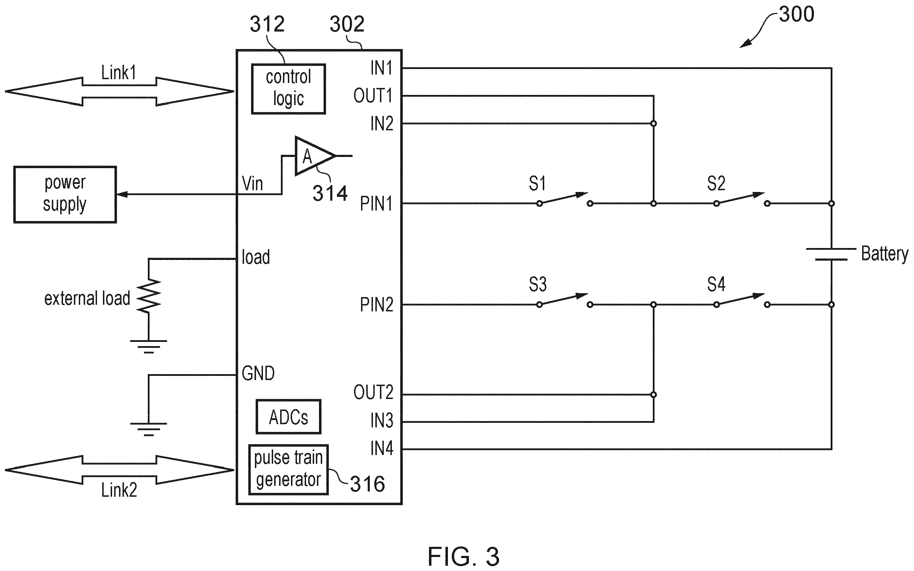

Fig. 3 illustrates a battery charging system (circuit) 300 for charging a rechargeable battery (e.g. lithium-ion battery cell), according to an embodiment of the invention. The battery charging system 300 includes a controller 302 and may include switches S1, S2, S3, S4. The controller 302 includes control logic 312 to perform battery charging in accordance with the present disclosure.

An external load can be connected to the controller 302 at its load terminal to receive power from the battery (battery discharging).

An external power supply can be connected to the controller 302 at its Vin terminal to supply power to the battery during battery charging. The controller 302 can include a level shifter 314 to attenuate the voltage provided by the external power supply during battery charging. The level shifter 314 can be an op-amp based design, a DC-DC converter, or any other suitable level shifting circuit.

The controller 302 can include high speed analog-to-digital converters (ADCs) for converting signals at its inputs In1, In2, In3, In4.

The controller 302 includes a pulse train generator 316. The pulse train generator 316, under the control of control logic 312, produces a train of pulses. The controller 302 can connect the output of the pulse train generator 316 to either of its outputs Out1, Out2.

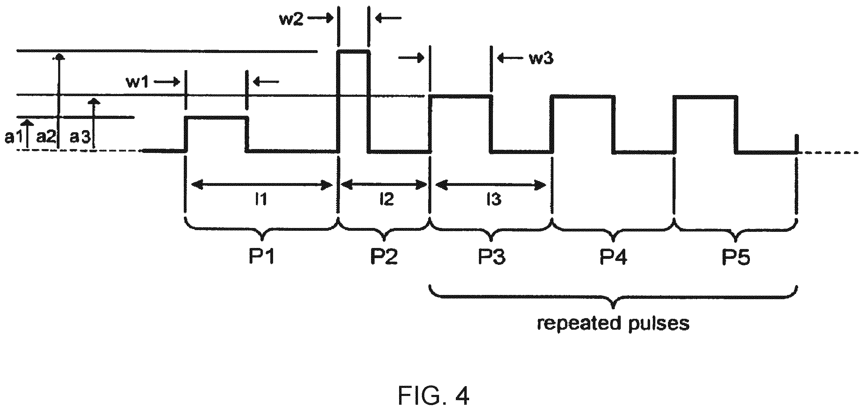

The controller 302 can control the pulse amplitude, pulse length (duration, period) and pulse width of each pulse. On the one hand, for example, the controller 302 can produce a train of pulses having a constant duty cycle. On the other hand, the controller 302 can produce a pulse train of pulses having different pulse amplitudes, pulse lengths, and pulse. Fig. 4, for example, shows a portion of a pulse train comprising pulses P1, P2, P3, P4, P5. Pulses P1 - P3 have different pulse amplitudes (a1 ≠ a2 ≠ a3), pulse lengths (11 ≠ 12 ≠ 13) and different pulse widths (w1 ≠ w2 ≠ w3). The pulse train may include a repetition of pulses having the same pulse period and pulse width; for example, pulses P3, P4, and P5 show an example of repeated pulses. In general, the pulse train may comprise pulses having any combination of the same or different amplitudes, lengths, and widths. In some embodiments, the pulses can be rectangular. In other embodiments, the pulses can have other shapes.

The controller 302 includes Pin1 and Pin2. The controller 302 can connect the battery to an external power supply via Pin1 and Pin2, when in charge mode, to be charged by the external power supply. Alternatively, the controller 302 can connect the battery to an external load via Pin1 and Pin2, when in discharge mode, to provide power from the battery to the external load.

The controller 302 can include the same communication links Link1, Link2 for communicating with external devices as controller 102.

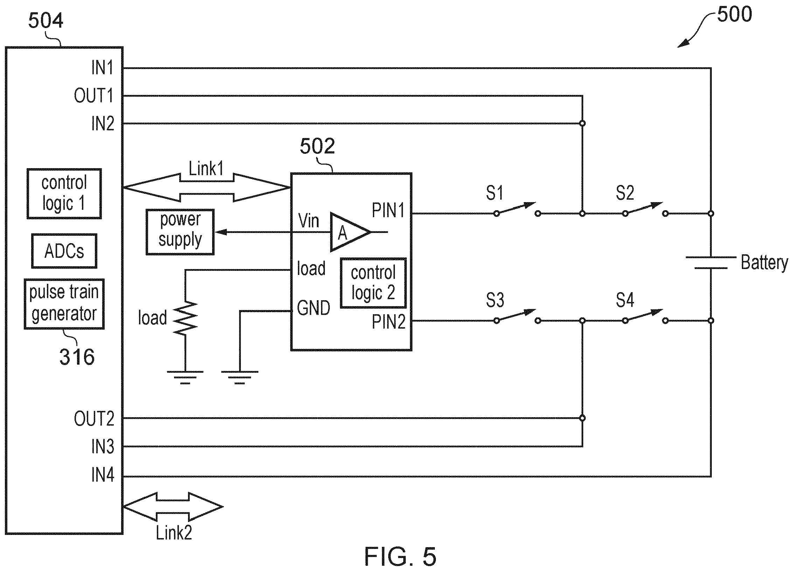

Fig. 5 shows a battery charging system (circuit) 500 in accordance with another embodiment of the present disclosure. Battery charging system 500 can comprise first controller 502 and a second controller 504. The circuit components described in controller 302 of battery charging system 300 are apportioned to the first and second controllers 502, 504 of battery charging system 500. Likewise, the control logic 312 in controller 302 of battery charging system 100 is apportioned to control logic 1 and control logic 2 in battery charging system 500. Operation of battery charging system 500 is the same as battery charging system 300.

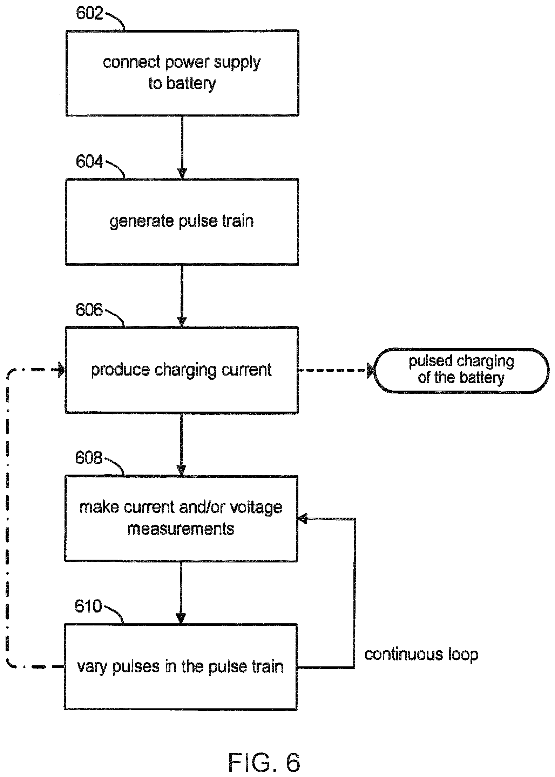

Referring to Fig. 6 and with reference to Fig. 3, the discussion will now turn to a high level description of processing by control logic 312 for pulse charging a battery in accordance with the present disclosure.

At block 602, the control logic 312 can configure connections in the controller 302 to connect the external power supply to the battery. For example, the control logic 312 can connect Pin1 and Pin2 respectively to the Vin and GND terminals, and operate switches S1, S2, S3, S4 to the ON state.

At block 604, the control logic 312 operates the pulse train generator 318 to produce a pulse train. The control logic 312 may choose initial settings for pulse amplitude, pulse length, and pulse duration for pulses comprising the pulse train based on previously stored measured battery parameters.

At block 606, the control logic 312 can operate switch S2 in accordance with the pulse train to generate a pulsed charging current by modulating the output of the external power supply, thus initiating pulse charging of the battery. The pulse amplitudes, pulse lengths, and pulse widths of the pulsed charging current are determined by the pulse amplitudes, pulse lengths, and pulse widths of pulses in the pulse train. In some embodiments, the pulse amplitudes in the pulse train can be used to set the gain of level shifter 314 and hence amplitudes in the pulsed charging current.

At block 608, while the battery is receiving the pulsed charging current, the control logic 312 makes EIS measurements on the battery, including one or more measurements of current flow into the battery and/or one or more measurements of voltage across the battery. For example, the control logic 312 can operate the ADCs corresponding to inputs In1 and In4 for making the measurements without disconnecting the pulsed charging current from the battery. In fact, the pulsed charging current serves as the drive signal for the battery when the EIS measurements are made.

At block 610, the control logic 312 can accumulate the EIS measurements with previously made EIS measurements. The control logic 312 analyzes the accumulated EIS measurements to assess parameters of the battery as discussed above. Based on the assessed battery parameters, the control logic 312 can vary any one or more of the pulse amplitude, pulse length, and pulse width of pulses comprising the pulse train, which in turn affects the pulsed charging current generated at block 606. For example, pulse amplitude may be adjusted depending the SOC of the battery . Likewise, pulse length may be adjusted when ion diffusion levels have reached a predetermined threshold, and so on. In this way, pulsed charging of the battery can be optimized, in real time, using EIS measurements of the battery that are made simultaneous with battery charging to increase the cycle life of the battery.

When the charging current is very high (globally or locally in some areas of the battery), the transport rate of lithium ions (Li+) to the anode can exceed the rate that Li+ can be inserted (intercalated). Under these conditions, Li+ may deposit as metallic Li, which can lead to the growth of dendrites. The dendrites can create short circuits, which can degrade the battery's life and its durability and in the worst case cause a fire. EIS measurements made in accordance with the present disclosure be used to detect the development of metal plating formation, even at the very early stages of development.

Accordingly in accordance with some embodiments, the control logic 312 can include analyses to detect the occurrence of metal plating such as dendrite formation, and in response can alter the pulse parameters to reduce the charging current, or interrupt the charging process altogether. In some embodiments, the control logic 312 can reduce the battery's usable capacity, and allow charging to continue only up to the reduce capacity. The battery could still be usable, albeit at reduce capacity.

In some embodiments, the control logic 312 can initiate a discharge sequence to discharge the battery in a controlled manner to reduce the charge level in the battery (or completely deplete the battery) to minimize the risk of a fire hazard. In some instances, the control logic 312 can disable use of the battery entirely. In some instances, the control logic 312 can also communicate the detection of metal plating to a battery management system (e.g., over Link1), which can issue an alarm or other indication to the user.

Fig. 6 shows that in some embodiments, the control logic 312 can continuously make EIS measurements during the time that battery charging is going on. For example, with each iteration, one or more current and/or voltage measurements can be made. The EIS measurements can be combined with previous EIS measurements and analyzed (e.g., Fourier analysis). Battery parameters discussed above can be assessed from the analysis results, and then used to vary parameters (e.g., amplitude, length, and width) of the pulses in the pulse train for the next iteration. The next iteration can be performed without delay (continuous).

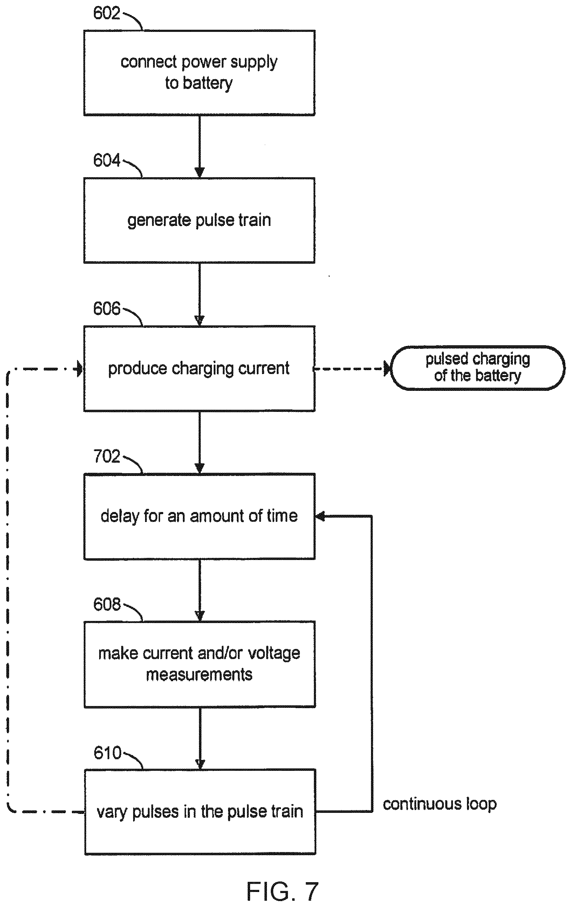

Fig. 7 shows that in some embodiments, the control logic 312 can make intermittent EIS measurements. The processing in Fig. 7 is the same as in Fig. 6 with the inclusion of delay at block 702 to provide delay between making EIS measurements (block 608). In some embodiments, for example, the delay may be a predetermined fixed value of time. The delay may vary from one iteration to the next. In other embodiments, EIS measurements may be triggered by the occurrence of one or more predetermined events (e.g., change in operating conditions such as ambient temperature); the delay arising from the time between such events.

In the foregoing embodiments the pulsed charging current that drives the battery at the time the EIS measurements are made, is optimized for charging. In other words, the pulse parameters are adjusted based on previously made EIS measurements, as discussed above. In some embodiments, the pulse parameters of the pulsed charging current may be momentarily altered for the purposes of making EIS measurements (i.e., optimized for measurements), and then restored to pulse parameters optimized for charging. This aspect of the present disclosure will now be described.

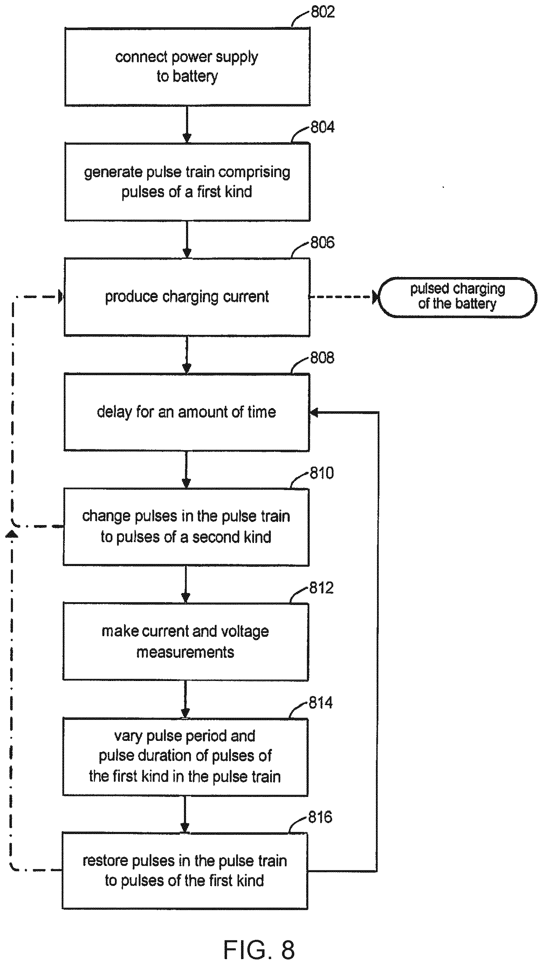

Referring to Fig. 8 and with reference to Fig. 3, the discussion will now turn to a high level description of processing by control logic 312 for pulse charging a battery in accordance with the present disclosure.

At block 802, the control logic 312 can configure connections in the controller 302 to connect the external power supply to the battery. For example, the control logic 312 can connect Pin1 and Pin2 respectively to the Vin and GND terminals, and operate switches S1, S2, S3, S4 to the ON state.

At block 804, the control logic 312 operates the pulse train generator 318 to produce a pulse train. The control logic 312 may choose initial settings for pulse amplitude, pulse length, and pulse duration for pulses comprising the pulse train based on previously stored measured battery parameters. As such, the pulse train initially comprises first kinds of pulses to optimize battery charging.

At block 806, the control logic 312 can operate switch S2 in accordance with the pulse train to generate a pulsed charging current by modulating the output of the external power supply, thus initiating pulse charging of the battery. The pulse amplitudes, pulse lengths, and pulse widths of the pulsed charging current are determined by the pulse amplitudes, pulse lengths, and pulse widths of pulses in the pulse train. In some embodiments, the pulse amplitudes in the pulse train can be used to set the gain of level shifter 314 and hence the amplitudes in the pulsed charging current.

At block 808, the control logic 312 provides a delay before proceeding to the next block. In some embodiments, for example, the delay may be a predetermined fixed value of time. The delay may vary from one iteration to the next. In other embodiments, EIS measurements may be triggered by the occurrence of one or more predetermined events (e.g., change in operating conditions such as ambient temperature); the delay arising from the time between such events.

At block 810, the control logic 312 can set the pulse train generator 316 to generate second kinds of pulses that are more suitable for making EIS measurements. According to the invention, the pulse train is a pseudo-random binary pulse sequence, which approximates a form of band-limited white noise, that produces a pulsed charging current. It may have a pulse amplitude in the range of 0.1C to 20C and pulse durations in the range from 1 mS to 5000 mS. Consequently, while the resulting pulsed charging current continues to charge the battery, it will no longer be optimized for battery charging, but rather for making EIS measurements. The momentary change in pulse parameters, however, should not be detrimental to the battery charging process because the EIS measurements take on the order of several seconds or less.

At block 812, while the battery is receiving the pulsed charging current, the control logic 312 makes EIS measurements on the battery, including one or more measurements of current flow into the battery and/or one or more measurements of voltage across the battery. For example, the control logic 312 can operate the ADCs corresponding to inputs In1 and In4 for making the measurements without disconnecting the pulsed charging current from the battery. In fact, the pulsed charging current serves as the drive signal for the battery when the EIS measurements are made.

At block 814, the control logic 312 can adjust the pulse parameters for battery charging as discussed above, for example, in connection with block 610 in Fig. 6.

At block 816, the control logic 312 sets pulse train generator 316 to generate pulses of the first kind to resume battery charging using a pulse train that is optimized for battery charging. Control logic 312 can then return to block 808 to repeat the process.

EIS measurements can be performed using any of several possible implementations. In one such implementation, for example, a programmable current source is controlled by an integrated circuit, and the EIS measurements are done continuously. In another implementation where cost control is a factor, the battery's regular charger can be used instead of a separate current source, and its current output can be controlled to generate a suitable pulse train, having parameters selected based on results of the EIS measurements. For example, a laptop computer or smart phone already contains a charging integrated circuit responsible for charging the battery. The charging integrated circuit can be directly controlled through a communication bus such as I²C or 5MBus^{®}.

Embodiments in accordance with the present disclosure, can employ circuitry coupled to the battery cell. Monitoring circuitry in the controller (e.g., 302) can be implemented on ASICs or FPGAs, where the monitoring circuitry monitors, senses, detects and/or samples, on an intermittent, continuous and/or periodic basis, characteristics of the battery including, for example, the impedance of the battery, the terminal voltages and the temperature. The control logic (e.g., 312) can acquires data from the monitoring circuitry and calculate one or more charge signal characteristics (e.g., charge current) and, if appropriate (e.g., to alleviate, minimize and/or reduce the adverse impact of the charging process on the state of the health of the battery), adapt the charging process, for example, by controlling the pulse parameters.

Circuitry for adaptive charging techniques of the present disclosure may employ any monitoring circuitry and techniques, to acquire EIS measurements employed by the control circuitry to adapt the charging profile of the battery.

Similarly, embodiments of the present disclosure employ the method and the circuit according to the claims to charge the battery (or cells thereof), as well as to adapt the charging process to, for example, alleviate, minimize and/or reduce the adverse impact of the charging operation on the state of the health of the battery.

Notably, a "circuit" means, among other things, single component (for example, integrated circuit or ASIC) or a multiplicity of components (whether in integrated circuit form, discrete form or otherwise), which are active and/or passive, and which are coupled together to provide or perform a desired operation.

## Claims

1. A method of determining the condition of a battery, the method comprising:
connecting (802) a power supply to a battery;
generating (804) a pulse train comprising a plurality of charging-optimized pulses;
producing (806) pulsed charging current from the power supply by modulating the power supply with the pulse train, the battery thereby being charged by the pulsed charging current;
providing (808) delay for an amount of time; **characterized in that**:
after the delay, generating (810) measurement-optimized pulses, wherein generating (810) the measurement-optimized pulses comprises generating a pseudo-random binary pulse sequence, and wherein pulsed charging current produced using the pseudo-random binary pulse sequence is characterized as a form of band-limited white noise;
while the battery is being charged with the pulsed charging current that is produced using the pseudo-random binary pulse sequence, making (812) a plurality of Electrochemical Impedance Spectroscopy, EIS, measurements of the battery, wherein making (812) the plurality of EIS measurements includes making (812) the plurality of EIS measurements based on the pulsed charging current that is produced using the pseudo-random binary pulse sequence;
analyzing the plurality of EIS measurements to assess a condition of the battery;
reporting results from the analysis of the plurality of EIS measurements to a battery management system; and
restoring charging of the battery with the charging-optimized pulses,
wherein the battery is incorporated into a smart phone, and wherein making the plurality of EIS measurements comprises making (812) the plurality of EIS measurements when the smart phone is deemed to be idle.

2. The method of claim 1, further comprising:
based on the analysis of the plurality of EIS measurements:
varying one or more of pulse amplitude, pulse length, and pulse width of the charging-optimized pulses comprising the pulse train.

3. The method of claim 1, wherein the plurality of EIS measurements are made without disconnecting the pulsed charging current from the battery.

4. The method of claim 1, further comprising continuously making (812) the plurality of EIS measurements while the battery is receiving the pulsed charging current.

5. The method of claim 1, wherein making (812) the plurality of EIS measurements comprises making the plurality of EIS measurements intermittently in response to a change in operating conditions.

6. A method of negotiating optional functioning modes of the battery and of an external load, comprising the method of any previous claim and communicating information relating to the battery condition to the external load.

7. A circuit (100) configured to determine the condition of a battery comprising:
a terminal for a connection to an external power supply;
a terminal for a connection to a battery;
a pulse train generator (318) configured to generate (804) a pulse train comprising a plurality of charging-optimized pulses; and
control logic (112) operative to:
produce (806) a pulsed charging current from the external power supply by modulating the power supply with the pulse train, the battery thereby being charged by the pulsed charging current;
provide (808) delay for an amount of time; **characterized in that**:
after the delay, generate (810) measurement-optimized pulses, wherein the measurement-optimized pulses comprise a pseudo-random binary pulse sequence, and wherein pulsed charging current produced using the pseudo-random binary pulse sequence is characterized as a form of band-limited white noise;
while the battery is being charged with the pulsed charging current that is produced using the pseudo-random binary pulse sequence, make (812) a plurality of Electrochemical Impedance Spectroscopy, EIS, measurements of the battery, wherein the plurality of EIS measurements are based on the pulsed charging current that is produced using the pseudo-random binary pulse sequence;
analyze the plurality of EIS measurements to assess a condition of the battery;
report results from the analysis of the plurality of EIS measurements to a battery management system; and
restore charging of the battery with the charging-optimized pulses,
wherein the battery is incorporated into a smart phone, and wherein the control logic is operative to make (812) the plurality of EIS measurements when the smart phone is deemed to be idle.

8. The circuit of claim 7, wherein the control logic is further operative to:
based on the analysis of the plurality of EIS measurements:
vary one or more of pulse amplitude, pulse length, and pulse width of the charging-optimized pulses comprising the pulse train.

9. The circuit of claim 7, wherein the plurality of EIS measurements are made (812) without disconnecting the pulsed charging current from the battery.

10. The circuit of claim 7, wherein the control logic (812) is operative to continuously make (812) the plurality of EIS measurements while the battery is receiving the pulsed charging current.

11. The circuit of claim 7, wherein the control logic (112) is operative to make (812) the plurality of EIS measurements intermittently in response to a change in operative conditions.

## Patentansprüche

1. Verfahren zum Bestimmen des Zustands einer Batterie, wobei das Verfahren Folgendes umfasst:
Verbinden (802) einer Stromversorgung mit einer Batterie;
Generieren (804) einer Impulsfolge, die eine Vielzahl von ladeoptimierten Impulsen umfasst;
Erzeugen (806) eines gepulsten Ladestroms aus der Stromversorgung durch Modulieren der Stromversorgung mit der Impulsfolge, wobei die Batterie durch den gepulsten Ladestrom geladen wird;
Bereitstellen (808) einer Verzögerung für eine Zeitspanne; **dadurch gekennzeichnet, dass**:
nach der Verzögerung Generieren (810) von messoptimierten Impulsen, wobei das Generieren (810) der messoptimierten Impulse das Generieren einer pseudozufälligen binären Impulsfolge umfasst und wobei der gepulste Ladestrom, der unter Verwendung der pseudozufälligen binären Impulsfolge erzeugt wird, als eine Form von bandbegrenztem weißem Rauschen gekennzeichnet ist;
während die Batterie mit dem gepulsten Ladestrom geladen wird, der unter Verwendung der pseudozufälligen binären Impulsfolge erzeugt wird, Durchführen (812) einer Vielzahl von Messungen der Batterie durch elektrochemische Impedanzspektroskopie (EIS), wobei das Durchführen (812) der Vielzahl von EIS-Messungen das Durchführen (812) der Vielzahl von EIS-Messungen basierend auf dem gepulsten Ladestrom beinhaltet, der unter Verwendung der pseudozufälligen binären Impulsfolge erzeugt wird;
Analysieren der Vielzahl von EIS-Messungen zur Beurteilung eines Zustands der Batterie;
Melden von Ergebnissen aus der Analyse der Vielzahl von EIS-Messungen an ein Batteriemanagementsystem; und
Wiederaufnehmen des Ladens der Batterie mit den ladeoptimierten Impulsen,
wobei die Batterie in ein Smartphone integriert ist und wobei das Durchführen der Vielzahl von EIS-Messungen das Durchführen (812) der Vielzahl von EIS-Messungen umfasst, wenn das Smartphone als inaktiv angesehen wird.

2. Verfahren nach Anspruch 1, ferner Folgendes umfassend:
basierend auf der Analyse der Vielzahl von EIS-Messungen:
Variieren von einem oder mehreren von Impulsamplitude, Impulslänge und Impulsbreite der ladeoptimierten Impulse, die die Impulsfolge umfassen.

3. Verfahren nach Anspruch 1, wobei die Vielzahl von EIS-Messungen durchgeführt wird, ohne den gepulsten Ladestrom von der Batterie zu trennen.

4. Verfahren nach Anspruch 1, ferner umfassend das kontinuierliche Durchführen (812) der Vielzahl von EIS-Messungen, während die Batterie den gepulsten Ladestrom empfängt.

5. Verfahren nach Anspruch 1, wobei das Durchführen (812) der Vielzahl von EIS-Messungen das intermittierende Durchführen der Vielzahl von EIS-Messungen als Reaktion auf eine Änderung der Betriebsbedingungen umfasst.

6. Verfahren zum Aushandeln optionaler Funktionsmodi der Batterie und einer externen Last, umfassend das Verfahren nach einem der vorhergehenden Ansprüche und das Übermitteln von Informationen in Bezug auf den Batteriezustand an die externe Last.

7. Schaltung (100), die konfiguriert ist, um den Zustand einer Batterie zu bestimmen, Folgendes umfassend:
einen Anschluss zur Verbindung mit einer externe Stromversorgung;
einen Anschluss zur Verbindung mit einer Batterie;
einen Impulsfolgengenerator (318), der konfiguriert ist, um eine Impulsfolge zu generieren (804), die eine Vielzahl von ladeoptimierten Impulsen umfasst; und
Steuerlogik (112), der zu Folgendem betriebsfähig ist:
Erzeugen (806) eines gepulsten Ladestroms aus der externen Stromversorgung durch Modulieren der Stromversorgung mit der Impulsfolge, wobei die Batterie durch den gepulsten Ladestrom geladen wird;
Bereitstellen (808) einer Verzögerung für eine Zeitspanne; **dadurch gekennzeichnet, dass**:
nach der Verzögerung Generieren (810) von messoptimierten Impulsen, wobei die messoptimierten Impulse eine pseudozufällige binäre Impulsfolge umfassen und wobei der gepulste Ladestrom, der unter Verwendung der pseudozufälligen binären Impulsfolge erzeugt wird, als eine Form von bandbegrenztem weißem Rauschen gekennzeichnet ist;
während die Batterie mit dem gepulsten Ladestrom geladen wird, der unter Verwendung der pseudozufälligen binären Impulsfolge erzeugt wird, Durchführen (812) einer Vielzahl von Messungen der Batterie durch elektrochemische Impedanzspektroskopie (EIS), wobei die Vielzahl von EIS-Messungen auf dem gepulsten Ladestrom basiert, der unter Verwendung der pseudozufälligen binären Impulsfolge erzeugt wird;
Analysieren der Vielzahl von EIS-Messungen zur Beurteilung eines Zustands der Batterie;
Melden von Ergebnissen aus der Analyse der Vielzahl von EIS-Messungen an ein Batteriemanagementsystem; und
Wiederaufnehmen des Ladens der Batterie mit den ladeoptimierten Impulsen,
wobei die Batterie in ein Smartphone integriert ist und wobei die Steuerlogik betriebsfähig ist, um die Vielzahl von EIS-Messungen durchzuführen (812), wenn das Smartphone als inaktiv angesehen wird.

8. Schaltung nach Anspruch 7, wobei die Steuerlogik ferner zu Folgendem betriebsfähig ist:
basierend auf der Analyse der Vielzahl von EIS-Messungen:
Variieren von einem oder mehreren von Impulsamplitude, Impulslänge und Impulsbreite der ladeoptimierten Impulse, die die Impulsfolge umfassen.

9. Schaltung nach Anspruch 7, wobei die Vielzahl von EIS-Messungen durchgeführt (812) wird, ohne den gepulsten Ladestrom von der Batterie zu trennen.

10. Schaltung nach Anspruch 7, wobei die Steuerlogik (812) betriebsfähig ist, um kontinuierlich die Vielzahl von EIS-Messungen durchzuführen (812), während die Batterie den gepulsten Ladestrom empfängt.

11. Schaltung nach Anspruch 7, wobei die Steuerlogik (112) betriebsfähig ist, um die Vielzahl von EIS-Messungen intermittierend als Reaktion auf eine Änderung der Betriebsbedingungen durchzuführen (812).

## Revendications

1. Procédé de détermination de l'état d'une batterie, le procédé comprenant :
la connexion (802) d'une alimentation électrique à une batterie ;
la génération (804) d'un train d'impulsions comprenant une pluralité d'impulsions optimisées pour la charge ;
la production (806) d'un courant de charge pulsé à partir de l'alimentation électrique en modulant l'alimentation électrique avec le train d'impulsions, la batterie étant ainsi chargée par le courant de charge puisé ;
la fourniture (808) d'un retard pendant une certaine durée ; **caractérisé par** :
après le retard, la génération (810) d'impulsions optimisées pour la mesure, dans lequel la génération (810) des impulsions optimisées pour la mesure comprend la génération d'une séquence pseudo-aléatoire d'impulsions binaires, et dans lequel le courant de charge pulsé produit à l'aide de la séquence pseudo-aléatoire d'impulsions binaires est caractérisé comme une forme de bruit blanc à bande limitée ;
pendant que la batterie est chargée avec le courant de charge pulsé qui est produit à l'aide de la séquence pseudo-aléatoire d'impulsions binaires, la réalisation (812) d'une pluralité de mesures de spectroscopie d'impédance électrochimique, EIS, de la batterie, dans lequel la réalisation (812) de la pluralité de mesures EIS comprend la réalisation (812) de la pluralité de mesures EIS en fonction du courant de charge pulsé qui est produit à l'aide de la séquence pseudo-aléatoire d'impulsions binaires ;
l'analyse de la pluralité de mesures EIS pour évaluer un état de la batterie ;
le rapport des résultats de l'analyse de la pluralité de mesures EIS à un système de gestion de batterie ; et
le rétablissement de la charge de la batterie avec les impulsions optimisées pour la charge,
dans lequel la batterie est intégrée dans un téléphone intelligent, et dans lequel la réalisation de la pluralité de mesures EIS comprend la réalisation (812) de la pluralité de mesures EIS lorsque le téléphone intelligent est considéré comme inactif.

2. Procédé selon la revendication 1, comprenant en outre :
en fonction de l'analyse de la pluralité de mesures EIS :
la variation d'une ou de plusieurs parmi l'amplitude d'impulsion, la longueur d'impulsion et la largeur d'impulsion des impulsions optimisées pour la charge comprenant le train d'impulsions.

3. Procédé selon la revendication 1, dans lequel la pluralité de mesures EIS sont réalisées sans déconnecter le courant de charge pulsé de la batterie.

4. Procédé selon la revendication 1, comprenant en outre la réalisation continue (812) de la pluralité de mesures EIS pendant que la batterie reçoit le courant de charge pulsé.

5. Procédé selon la revendication 1, dans lequel la réalisation (812) de la pluralité de mesures EIS comprend la réalisation de la pluralité de mesures EIS par intermittence en réponse à un changement des états de fonctionnement.

6. Procédé de négociation des modes de fonctionnement optionnels de la batterie et d'une charge externe, comprenant le procédé selon l'une quelconque des revendications précédentes et communiquant des informations relatives à l'état de la batterie à la charge externe.

7. Circuit (100) conçu pour déterminer l'état d'une batterie comprenant :
une borne permettant une connexion à une alimentation électrique externe ;
une borne permettant une connexion à une batterie ;
un générateur de train d'impulsions (318) conçu pour générer (804) un train d'impulsions comprenant une pluralité d'impulsions optimisées pour la charge ; et
une logique de commande (112) permettant de :
produire (806) un courant de charge pulsé à partir de l'alimentation électrique externe en modulant l'alimentation électrique avec le train d'impulsions, la batterie étant ainsi chargée par le courant de charge puisé ;
fournir (808) un retard pendant une certaine durée ; **caractérisé par** :
après le retard, la génération (810) d'impulsions optimisées pour la mesure, dans lequel les impulsions optimisées pour la mesure comprennent une séquence pseudo-aléatoire d'impulsions binaires, et dans lequel le courant de charge pulsé produit à l'aide de la séquence pseudo-aléatoire d'impulsions binaires est caractérisé comme une forme de bruit blanc à bande limitée ;
tandis que la batterie est chargée avec le courant de charge pulsé qui est produit à l'aide de la séquence pseudo-aléatoire d'impulsions binaires, la réalisation (812) d'une pluralité de mesures de spectroscopie d'impédance électrochimique, EIS, de la batterie, dans lequel la pluralité de mesures EIS sont basées sur le courant de charge pulsé qui est produit à l'aide de la séquence pseudo-aléatoire d'impulsions binaires ;
l'analyse de la pluralité de mesures EIS pour évaluer un état de la batterie ;
le rapport des résultats de l'analyse de la pluralité de mesures EIS à un système de gestion de batterie ; et
le rétablissement de la charge de la batterie avec les impulsions optimisées pour la charge,
dans lequel la batterie est intégrée dans un téléphone intelligent, et dans lequel la logique de commande permet de réaliser (812) la pluralité de mesures EIS lorsque le téléphone intelligent est considéré comme inactif.

8. Circuit selon la revendication 7, dans lequel la logique de commande permet en outre de :
en fonction de l'analyse de la pluralité de mesures EIS :
faire varier une ou plusieurs parmi l'amplitude d'impulsion, la longueur d'impulsion et la largeur d'impulsion des impulsions optimisées pour la charge comprenant le train d'impulsions.

9. Circuit selon la revendication 7, dans lequel la pluralité de mesures EIS sont réalisées (812) sans déconnecter le courant de charge pulsé de la batterie.

10. Circuit selon la revendication 7, dans lequel la logique de commande (812) permet de réaliser en continu (812) la pluralité de mesures EIS pendant que la batterie reçoit le courant de charge pulsé.

11. Circuit selon la revendication 7, dans lequel la logique de commande (112) permet de réaliser (812) la pluralité de mesures EIS par intermittence en réponse à un changement des états de fonctionnement.
